# FASCICULE DE BREVET EUROPEEN

(11) **EP 1 573 217 B1**
(45) Date de publication et mention de la délivrance du brevet: **03.10.2007**
(21) Numéro de dépôt: 03799552.9
(22) Date de dépôt: 10.12.2003
(51) Int. Cl.: F16D 11/04

(54) **DISPOSITIF D ACCOUPLEMENT A CRABOT**
KLAUENKUPPLUNGS-VERBINDUNGSVORRICHTUNG
DOG-CLUTCH COUPLING DEVICE

(30) Priorité: 17.12.2002 FR 0215996
(43) Date de publication de la demande: 14.09.2005
(73) Titulaire: Thales, 92526 Neuilly Sur Seine (FR)
(72) Inventeur: SKORUCAK, Bela, 94117 Arcueil (FR)
(74) Mandataire: Collet, Alain
(86) Numéro de dépôt international: PCT/EP2003/050976
(87) Numéro de publication internationale: WO 2004/055403

(56) Documents cités:
- EP-A- 0 947 733
- US-A- 4 382 495

## Description

L'invention se rapporte à un dispositif d'accouplement de deux arbres destinés à tourner dans le prolongement l'un de l'autre. Un crabot assure l'accouplement des deux arbres. Un crabot comporte généralement des dents ou des griffes appartenant à chacun des deux arbres. Lorsque les dents (ou les griffes) coopèrent entre elles, les deux arbres sont accouplés. Un dispositif d'accouplement à crabot comporte également des moyens pour écarter les dents de chaque arbre afin de les désaccoupler. Ces moyens seront appelés moyens de décrabotage pour la suite de la description.

Des moyens connus de décrabotage nécessitent l'arrêt de la rotation des deux arbres ainsi qu'un effort extérieur important permettant d'écarter les dents. En effet, les dents sont généralement maintenues en contact au moyen d'un ressort et il est donc nécessaire de vaincre l'effort de ce ressort pour décraboter.

De ce fait, il n'est pas possible d'utiliser un accouplement à crabot connu pour accoupler un démarreur avec un moteur si on cherche à désaccoupler le démarreur lorsque le moteur est lancé.

US-A-4,382,495 décrit un dispositif d'accouplement selon le préambule le de la revendication 1.

L'invention a pour but de pallier ces difficultés en proposant un dispositif d'accouplement à crabot pour lequel les moyens de décrabotage peuvent désaccoupler les arbres même lorsque ceux-ci sont en rotation et pour lequel les moyens de décrabotage peuvent désaccoupler les arbres automatiquement en cas d'inversion du couple résistant entre un arbre menant et un arbre mené.

A cet effet, l'invention a pour objet un dispositif d'accouplement d'un arbre menant et d'un arbre mené destinés à tourner par rapport à un carter, dans le prolongement l'un de l'autre sensiblement autour d'un axe, le dispositif comportant un crabot permettant à l'arbre menant d'entraîner l'arbre mené et des moyens de décrabotage permettant de désaccoupler le crabot d'une position crabotée vers une position décrabotée, les moyens de décrabotage comportant au moins une première goulotte solidaire d'un élément menant du crabot, la première goulotte ayant la forme d'une portion de tore autour de l'axe, au moins une seconde goulotte solidaire de l'arbre menant, la seconde goulotte ayant une forme hélicoïdale autour de l'axe, ainsi qu'un élément roulant destiné à rouler entre la première et dans la seconde goulotte.

L'invention permet, en outre, de réduire considérablement l'effort nécessaire au décrabotage. Grâce à l'invention, l'effort nécessaire à l'écartement des dents du crabot n'est plus fourni par des moyens extérieurs au dispositif mais par le dispositif lui-même et, plus précisément, par l'énergie de rotation des arbres.

L'invention permet également de réduire de façon importante la masse des moyens de décrabotage et d'augmenter leur compacité.

L'invention sera mieux comprise et d'autres avantages apparaîtront à la lecture de la description détaillée d'un mode de réalisation de l'invention donné à titre d'exemple, description illustrée par le dessin joint dans lequel :
- la figure 1 représente un dispositif d'accouplement conforme à l'invention, en coupe par l'axe des deux arbres ; la partie supérieure de la coupe représente le dispositif d'accouplement en position crabotée et la partie inférieure de la coupe représentent le dispositif d'accouplement en position décrabotée ;
- les figures 2a et 2b représentent les goulottes et l'élément roulant en vue développée autour de l'axe de rotation des arbres ;
- la figure 3 représente un exemple de réalisation des dents du crabot ;
- la figure 4 représente, en coupe perpendiculairement à l'axe de rotation des arbres, des moyens de freinage de l'élément menant et des moyens de roue libre.

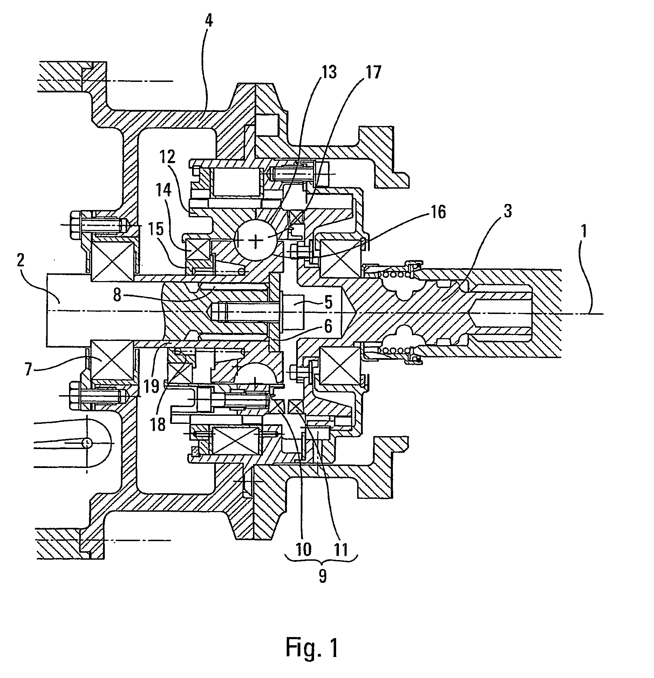

Sur la figure 1, un dispositif d'accouplement est représenté en coupe selon un plan comprenant un axe 1 autour duquel deux arbres 2 et 3 peuvent tourner par rapport à un carter 4. L'arbre 2 est par exemple celui du rotor d'un moteur électrique utilisé comme démarreur. Un palier tournant comportant par exemple un roulement 7 permet la rotation de l'arbre 2 par rapport au carter 4, la rotation se faisant autour de l'axe 1. L'arbre 3 permet par exemple d'accoupler le moteur électrique à une boîte relais (non représentée).

Un crabot 9 permet d'accoupler et de désaccoupler les arbres 2 et 3. Selon l'exemple représenté, le crabot 9 comporte une première série de dents 10 solidaires d'un élément menant 12 du crabot 9 et une seconde série de dents 11 solidaires de l'arbre 2. Les dents 10 et les dents 11 coopèrent entre elles de façon à assurer l'entraînement de l'arbre 2 par l'arbre 3 lorsque le dispositif d'accouplement est en position crabotée.

Des moyens de décrabotage permettent de désaccoupler les dents 10 et 11. Les moyens de décrabotage comportent au moins une première goulotte 13, solidaire de l'élément menant 12, et ayant la forme d'une portion de tore autour de l'axe 1. Les moyens de décrabotage comportent en outre au moins une seconde goulotte 16 solidaire de l'arbre 2. La seconde goulotte 16 a une forme hélicoïdale autour de l'axe 1. Les moyens de décrabotage comportent également un élément roulant 17 destiné à rouler entre la première et la seconde goulotte 13 et 16. L'élément roulant 17 est avantageusement une bille sphérique. Un élément élastique tel que, par exemple, un ressort hélicoïdal 18 tend à maintenir les dents 10 et 11 désaccouplées. Le ressort hélicoïdal 18 s'appuie entre l'arbre menant 2 et l'élément menant 12 du crabot 9. L'élément menant 12 peut effectuer un mouvement en hélice par rapport à l'arbre 2 autour de l'axe 1. On peut prévoir une pièce de révolution 14 autour de l'axe 1, libre en rotation par rapport à l'élément menant 12. Le ressort hélicoïdal 18 s'appuie alors sur l'élément menant 12 par l'intermédiaire de la pièce de révolution 14 qui, entraînée par le ressort hélicoïdal 18, tourne en permanence à la même vitesse de rotation que l'arbre 2 autour de l'axe 1. La liberté en rotation de la pièce de révolution 14 par rapport à l'élément menant 12 peut être assurée par une butée à bille 15.

Lorsque les dents 10 et 11 du crabot 9 sont accouplées et que l'arbre 2 est menant, c'est-à-dire qu'il exerce un couple moteur sur l'arbre 3, l'élément menant 12 est freiné dans sa rotation autour de l'axe 1 par les dents 11 solidaires de l'arbre 3. Le freinage de l'élément menant 12 tend à déplacer l'élément menant 12 par rapport à l'arbre 2 dans son mouvement en hélice de telle sorte que les dents 10 et 11 restent accouplées.

En revanche, lorsque l'arbre 2 n'exerce plus de couple moteur sur l'arbre 3, le ressort 18 tend à déplacer l'élément menant 12 par rapport à l'arbre 2 dans son mouvement en hélice en sens inverse au mouvement précédemment décrit de telle sorte que les dents 10 et 11 se désaccouplent. Le désaccouplement des dents 10 et 11 se fait automatiquement lorsque l'arbre 2 cesse d'exercer un couple moteur sur l'arbre 3. Le désaccouplement automatique est utile lorsque, par exemple, l'arbre 2 est celui d'un démarreur et l'arbre 3 est celui d'un moteur que le démarreur doit lancer. Dans un premier temps, le démarreur entraîne le moteur et le crabot 9 reste accouplé. Dans un second temps, lorsque le moteur est lancé, le crabot 9 se désaccouple automatiquement sans intervention extérieure.

Avantageusement, la seconde goulotte 16 est réalisée dans un manchon 19 rapporté sur l'arbre 2. Le manchon 19 est solidaire de l'arbre 2. Une liaison en rotation autour de l'axe 1 entre le manchon 19 et l'arbre 2 est par exemple assurée par des cannelures 8. Le manchon 19 est arrêté en translation par rapport à l'arbre 2, par exemple au moyen d'une vis 5 vissée dans l'arbre 2 et dont la tête s'appuie sur le manchon 19 par l'intermédiaire d'une rondelle 6. Le manchon 19 peut avantageusement servir de butée à la cage intérieure du roulement 7.

Avantageusement, le dispositif d'accouplement comporte trois premières goulottes 13 réparties de façon homogène autour de l'axe 1, trois secondes goulottes 16 réparties de la même façon que les trois premières goulottes 13, trois éléments roulants 17.

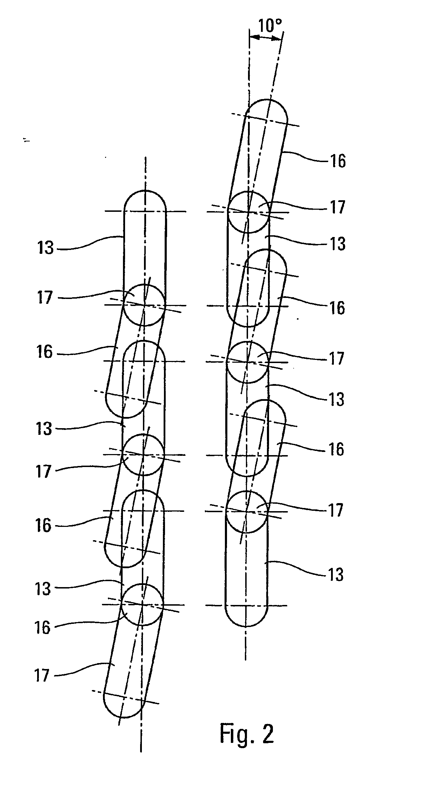

Plus précisément, un élément roulant 17 peut rouler entre une des trois premières goulottes 13 et une des trois secondes goulottes 16. Il en est de même pour les autres goulottes 13 et 16 qui fonctionnement toutes par couple avec un élément roulant 17 entre chaque goulotte 13 et 16 du couple. Les trois couples de goulottes 13 et 16 ainsi que leur élément roulant associé 17 sont représentés sur les figures 2a et 2b en vue développée autour de l'axe 1. La figure 2a représente la position décrabotée et la figure 2b représente la position crabotée. Sur les figures 2a et 2b, on voit les trois goulottes 13 réalisées dans le prolongement l'une de l'autre et s'étendant perpendiculairement à l'axe 1. On voit également la forme hélicoïdale des trois goulottes 16. L'angle d'hélice des goulottes 16 est par exemple de 10°.

Avantageusement, les dents de chaque série ont des formes triangulaires complémentaires, les formes sont réalisées de telle sorte que lorsque l'arbre menant 2 entraîne l'arbre mené 3, un prolongement de chaque surface en contact de chaque série de dent comprend l'axe 1.

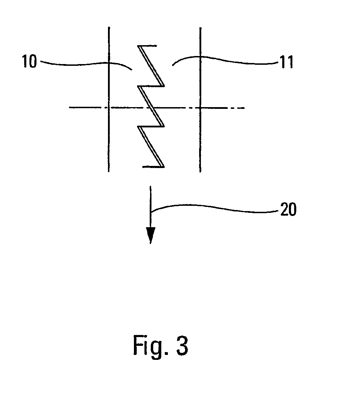

Un exemple de forme de dent est bien visible sur la figure 3. Autrement dit, lorsque l'arbre menant 2 entraîne l'arbre en 3, chaque dent 10 exerce un effort sur une dent 11 correspondante dans une direction perpendiculaire à l'axe 1. A l'inverse, si l'arbre mené tend à entraîner l'arbre menant, chaque dent 11 exerce un effort sur dent 10 correspondante dans une direction telle qu'une composante de cet effort tend à écarter les deux séries de dents 10 et 11 et donc à décraboter. La figure 3 est une vue partielle développée autour de l'axe 1. Le sens de rotation des arbres est représenté par la flèche 20.

Lorsque le dispositif est à l'arrêt, les dents 10 et 11 du crabot 9 sont désaccouplées du fait de l'action du ressort hélicoïdal 18 qui maintient l'élément menant 12 dans la position représentée sur la partie basse de la figure 1 dite position décrabotée. On peut choisir la raideur du ressort hélicoïdal 18 pour que, lorsqu'on met en mouvement l'arbre menant 2, l'inertie de l'élément menant 12 soit suffisante pour que les éléments roulant 17 se déplacent dans les goulottes 13 et 16 et que l'élément menant 12 quitte la position décrabotée pour se rapprocher de la position crabotée représentée dans la partie haute de la figure 1. Même si l'inertie de l'élément menant 12 n'est pas suffisante pour atteindre la position crabotée, il suffit que les dents 10 et 11 viennent au contact les unes des autres pour que l'inertie de l'élément menant 12 augmente et que, par conséquent, l'élément menant 12 atteigne la position crabotée.

La mise en mouvement de l'arbre 2 peut même être réalisée si l'arbre mené 3 n'est pas à l'arrêt. Dans ce cas, lorsque la vitesse de l'arbre mené 3, le crabotage s'effectue.

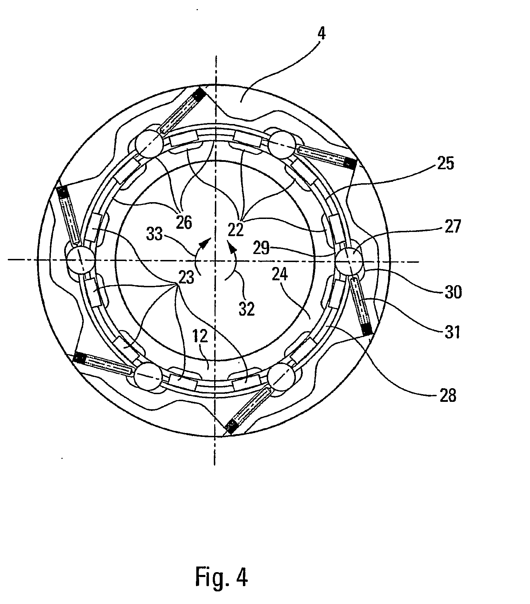

Avantageusement, on peut améliorer le crabotage lorsque l'arbre menant 2 se met en mouvement en disposant dans le dispositif un frein 21 destiné à ralentir l'élément menant 12 dans sa rotation par rapport à l'arbre menant 2. En pratique, le frein 21 peut être placé dans le carter 4 et freiner la rotation de l'élément menant 12. En freinant l'élément menant 12 par rapport au carter 4, on ralentit l'élément menant 12 par rapport à l'arbre menant 2 lorsque l'arbre menant 2 se met en mouvement. Le frein est, par exemple, à réluctance afin d'éviter tout frottement mécanique entre le carter 4 et l'élément menant 2. Dans un mode de réalisation donné à titre d'exemple et représenté sur la figure 4, le frein 21 comporte une pluralité d'encoches 22 réalisées dans un matériau magnétique appartenant à l'élément menant 12, une pluralité d'aimant permanent 23 solidaires du carter 4 et en interaction avec le matériau magnétique.

Les encoches 22 sont situées sur une partie cylindrique extérieure 24 de l'élément menant 12, partie cylindrique 24 d'axe 1. La partie cylindrique 24 est réalisée dans le matériau magnétique. Les aimants permanents 23 sont situés dans une partie cylindrique 25 intérieure du carter 4, la partie cylindrique intérieure 25 est également d'axe 1 de telle sorte que lorsque l'élément menant 12 tourne à l'intérieur du carter 4, chaque aimant permanent 23 est en interaction magnétique alternativement avec une encoche 22 puis avec une partie pleine 26 du matériau magnétique de l'élément menant 12. Une partie pleine 26 sépare deux encoches 22 et il y a autant d'encoches 22 que de parties pleines 26 sur la partie cylindrique extérieure 24. L'alternance d'interaction des aimants permanents 23 avec les encoches 22 et les parties pleines 26 génère des efforts qui tendent à ralentir l'élément menant 12 dans sa rotation autour de l'axe 1.

Avantageusement, le dispositif d'accouplement comporte des moyens autorisant la rotation de l'élément menant 12 dans un seul sens de rotation autour de l'axe 1.

Ces moyens sont également appelés roue libre. Ces moyens comportent par exemple au moins un galet 27 libre en rotation par rapport à une cage 28 solidaire du carter 4, une surface de révolution 29 appartenant à l'élément menant 2 et d'axe confondu avec l'axe 1 de rotation de l'élément menant une rampe 30 appartenant au carter 4 inclinée par rapport une tangente à la surface de révolution 29 en une zone de la surface de révolution où le galet 27 est susceptible de rouler, ainsi qu'un élément élastique 31 s'opposant au déplacement du galet 27 le long de la rampe 30.

Sur la figure 4, six galets 27 ont été représentés avec leur rampe 30 et leur élément élastique 31 respectif. La surface de révolution 31 est commune à l'ensemble des galets 27.

Lorsque l'élément menant 12 tend à tourner dans le sens représenté par la flèche 32, les galets 27 se coincent entre leurs rampes respectives 30 et la surface de révolution 29 et la rotation est impossible. En revanche, lorsque l'élément menant 12 tend à tourner dans le sens inverse, c'est-à-dire celui représenté par la flèche 33, les galets 27 peuvent rouler librement entre la surface de révolution 29 et leurs rampes respectives. Dans ce sens 33, la rotation de l'élément menant 12 est possible.

De plus, lorsque la surface de révolution 29 est à proximité des encoches 22 et des parties pleines 26 de telle sorte qu'il puisse y avoir interaction magnétique entre les galets 27 et la surface de révolution, une rotation de l'élément menant 12 tend à éloigner les galets 27 de la surface de révolution 29 en comprimant l'élément élastique 31. Ceci permet d'éviter tout frottement dans la rotation de l'élément menant 12 par rapport au carter 4.

## Revendications

1. Dispositif d'accouplement d'un arbre menant (2) et d'un arbre mené (3) destinés à tourner par rapport à un carter (4), dans le prolongement l'un de l'autre sensiblement autour d'un axe (1), le dispositif comportant un crabot (9) permettant à l'arbre menant (2) d'entraîner l'arbre mené (3) et des moyens de décrabotage permettant de désaccoupler le crabot (9) d'une position crabotée vers une position décrabotée, les moyens de décrabotage comportant au moins une première goulotte (13) solidaire d'un élément menant (12) du crabot (9), et au moins une seconde goulotte (16) solidaire de l'arbre menant (2), ainsi qu'un élément roulant (17) destiné à rouler entre la première (13) et dans la seconde goulotte (16), **caractérisé en ce que** la première goulotte (13) a la forme d'une portion de tore autour de l'axe (1), et **en ce que** la seconde goulotte (16) a une forme hélicoïdale autour de l'axe (1).

2. Dispositif d'accouplement selon la revendication 1, **caractérisé en ce que** l'élément roulant (17) est une bille sphérique, et **en ce qu'**une section droite de chaque goulotte (13, 16) est une portion de cercle de rayon sensiblement égal à celui de la bille sphérique.

3. Dispositif d'accouplement selon l'une des revendications précédentes, **caractérisé en ce qu'**il comporte trois premières goulottes (13) réparties de façon homogène autour de l'axe (1), trois secondes goulottes (16) réparties de la même façon que les trois premières goulottes (13), et trois éléments roulants (17).

4. Dispositif d'accouplement selon l'une des revendications précédentes, **caractérisé en ce que** le crabot (9) comporte une première série de dents (10) solidaires de l'arbre menant (2) et une seconde série de dents (11) solidaires de l'arbre mené (3), les dents de chaque série ont des formes triangulaires complémentaires, les formes sont réalisées de telle sorte que lorsque l'arbre menant (2) entraîne l'arbre mené (3), un prolongement de chaque surface en contact de chaque série de dent comprend l'axe (1).

5. Dispositif selon l'une des revendications précédentes, **caractérisé en ce qu'**il comporte un frein (21) destiné à ralentir l'élément menant (12) dans sa rotation par rapport à l'arbre menant (2).

6. Dispositif selon la revendication 5, **caractérisé en ce que** le frein (21) est à réluctance.

7. Dispositif selon la revendication 6, **caractérisé en ce que** le frein (21) comporte une pluralité d'encoches (22) réalisées dans un matériau magnétique appartenant à l'élément menant (12), une pluralité d'aimants permanents (23) solidaires du carter (4) et en interaction avec le matériau magnétique.

8. Dispositif selon l'une des revendications précédentes, **caractérisé en ce qu'**il comporte des moyens autorisant la rotation de l'élément menant (12) dans un seul sens de rotation autour de l'axe (1).

9. Dispositif selon la revendication 8 en tant que revendication dépendante de la revendication 7, **caractérisé en ce que** les moyens autorisant la rotation de l'élément menant (12) dans un seul sens de rotation autour de l'axe (1) comportent au moins un galet (27) libre en rotation par rapport à une cage (28) solidaire du carter (4), une surface de révolution (29) appartenant à l'élément menant (2) et d'axe confondu avec l'axe (1) de rotation de l'élément menant (12), une rampe (30) appartenant au carter (4) inclinée par rapport une tangente à la surface de révolution (29) en une zone de la surface de révolution où le galet (27) est susceptible de rouler, ainsi qu'un élément élastique (31) s'opposant au déplacement du galet (27) le long de la rampe (30).

10. Dispositif selon la revendication 9, **caractérisé en ce que** la surface de révolution (29) est à proximité des encoches (22) et des parties pleines (26) de telle sorte qu'il puisse y avoir interaction magnétique entre les galets (27) et la surface de révolution.

## Claims

1. Device for coupling a driving shaft (2) and a driven shaft (3) which are intended to rotate with respect to a casing (4) in the continuation of one another more or less about an axis (1), the device comprising a dog clutch (9) allowing the driving shaft (2) to drive the driven shaft (3) and declutching means allowing the dog clutch (9) to be uncoupled from a clutch-engaged position to a declutched position, the declutching means comprising at least one first channel (13) secured to a driving element (12) of the dog clutch (9), and at least one second channel (16) secured to the driving shaft (2), and a rolling element (17) intended to roll between the first (13) and in the second channel (16), **characterized in that** the first channel (13) has the shape of a portion of a torus about the axis (1), and **in that** the second channel (16) has a helical shape about the axis (1).

2. Coupling device according to Claim 1, **characterized in that** the rolling element (17) is a spherical ball and **in that** a cross section of each channel (13, 16) is a portion of a circle of radius more or less equal to that of the spherical ball.

3. Coupling device according to either of the preceding claims, **characterized in that** it comprises three first channels (13) distributed uniformly about the axis (1), three second channels (16) distributed in the same way as the three first channels (13), and three rolling elements (17).

4. Coupling device according to one of the preceding claims, **characterized in that** the dog clutch (9) comprises a first series of teeth (10) secured to the driving shaft (2) and a second series of teeth (11) secured to the driven shaft (3), the teeth in each series have complementing triangular shapes, the shapes are produced in such a way that when the driving shaft (2) drives the driven shaft (3) a continuation of each contacting surface of each series of teeth contains the axis (1).

5. Device according to one of the preceding claims, **characterized in that** it comprises a brake (21) intended to slow the driving element (12) in its rotation with respect to the driving shaft (2).

6. Device according to Claim 5, **characterized in that** the brake (21) is of the reluctance type.

7. Device according to Claim 6, **characterized in that** the brake (21) comprises a plurality of slots (22) made in a magnetic material belonging to the driving element (12), a plurality of permanent magnets (23) secured to the casing (4) and in interaction with the magnetic material.

8. Device according to one of the preceding claims, **characterized in that** it comprises means allowing the driving element (12) to rotate in just one direction of rotation about the axis (1).

9. Device according to Claim 8 as being a claim dependent on Claim 7, **characterized in that** the means that allow the driving element (12) to rotate in just one direction of rotation about the axis (1) comprise at least one roller (27) free to rotate with respect to a cage (28) secured to the casing (4), a surface of revolution (29) belonging to the driving shaft (2) and the axis of which is coincident with the axis (1) of rotation of the driving element (12), a ramp (30) belonging to the casing (4) and inclined with respect to a tangent in the surface of revolution (29) at a region on the surface of revolution where the roller (27) is liable to roll, and an elastic element (31) opposing the movement of the roller (27) along the ramp (30).

10. Device according to Claim 9, **characterized in that** the surface of revolution (29) is near the slots (22) and the solid parts (26) so that there can be magnetic interaction between the rollers (27) and the surface of revolution.

## Patentansprüche

1. Kupplungsvorrichtung einer Antriebswelle (2) und einer Abtriebswelle (3), die dazu bestimmt sind, bezüglich eines Gehäuses (4) in der gegenseitigen Verlängerung im Wesentlichen um eine Achse (1) zu drehen, wobei die Vorrichtung eine Klauenkupplung (9), die es der Antriebswelle (2) ermöglicht, die Abtriebswelle (3) anzutreiben, und Ausrückmittel aufweist, die es ermöglichen, die Klauenkupplung (9) aus einer eingerückten Stellung in eine ausgerückte Stellung auszukuppeln, wobei die Ausrückmittel mindestens eine erste Rinne (13), die fest mit einem Antriebselement (12) der Klauenkupplung (9) verbunden ist, und mindestens eine zweite Rinne (16), die fest mit der Antriebswelle (2) verbunden ist, sowie ein rollendes Element (17) aufweisen, das dazu bestimmt ist, zwischen der ersten (13) und in der zweiten Rinne (16) zu rollen, **dadurch gekennzeichnet, dass** die erste Rinne (13) die Form eines Torusabschnitts um die Achse (1) hat und dass die zweite Rinne (16) eine Schraubenform um die Achse (1) hat.

2. Kupplungsvorrichtung nach Anspruch 1, **dadurch gekennzeichnet, dass** das rollende Element (17) eine runde Kugel ist, und dass ein Querschnitt jeder Rinne (13, 16) ein Kreisabschnitt mit einem Radius im Wesentlichen gleich demjenigen der runden Kugel ist.

3. Kupplungsvorrichtung nach einem der vorhergehenden Ansprüche, **dadurch gekennzeichnet, dass** sie vier erste Rinnen (13), die homogen um die Achse (1) verteilt sind, drei zweite Rinnen (16), die in gleicher Weise wie die drei ersten Rinnen (13) verteilt sind, und drei rollende Elemente (17) aufweist.

4. Kupplungsvorrichtung nach einem der vorhergehenden Ansprüche, **dadurch gekennzeichnet, dass** die Klauenkupplung (9) eine erste Reihe von zähnen (10), die fest mit der Antriebswelle (2) verbunden sind, und eine zweite Reihe von Zähnen (11) aufweist, die fest mit der Abtriebswelle (3) verbunden sind, wobei die Zähne jeder Reihe komplementäre dreieckige Formen haben, wobei die Formen so hergestellt sind, dass, wenn die Antriebswelle (2) die Abtriebswelle (3) antreibt, eine Verlängerung jeder in Kontakt stehenden Fläche jeder Reihe von Zähnen die Achse (1) enthält.

5. Vorrichtung nach einem der vorhergehenden Ansprüche, **dadurch gekennzeichnet, dass** sie eine Bremse (21) aufweist, die dazu bestimmt ist, das Antriebselement (12) in seiner Drehung bezüglich der Antriebswelle (2) zu verlangsamen.

6. Vorrichtung nach Anspruch 5, **dadurch gekennzeichnet, dass** die Bremse (21) eine Reluktanz-Bremse ist.

7. Vorrichtung nach Anspruch 6, **dadurch gekennzeichnet, dass** die Bremse (21) mehrere Aussparungen (22), die aus einem zum Antriebselement (12) gehörenden magnetischen Werkstoff hergestellt sind, und mehrere Dauermagneten (23) aufweist, die fest mit dem Gehäuse (4) verbunden sind und mit dem magnetischen Werkstoff in Wechselwirkung stehen.

8. Vorrichtung nach einem der vorhergehenden Ansprüche, **dadurch gekennzeichnet, dass** sie Mittel aufweist, die die Drehung des Antriebselements (12) nur in einer Drehrichtung um die Achse (1) erlauben.

9. Vorrichtung nach Anspruch 8 als von Anspruch 7 abhängender Anspruch, **dadurch gekennzeichnet, dass** die Mittel, die die Drehung des Antriebselements (12) nur in einer Drehrichtung um die Achse (1) erlauben, mindestens eine Laufrolle (27), die bezüglich eines fest mit dem Gehäuse (4) verbundenen Käfigs (28) frei drehbar ist, eine Umdrehungsfläche (29), die zum Antriebselement (2) gehört und eine mit der Drehachse (1) des Antriebselements (12) zusammenfallende Achse hat, eine zum Gehäuse (4) gehörende Rampe (30), die bezüglich einer Tangente zur Umdrehungsfläche (29) in einer Zone der Umdrehungsfläche geneigt ist, in der die Laufrolle (27) rollen kann, sowie ein elastisches Element (31) aufweisen, das der Bewegung der Laufrolle (27) entlang der Rampe (30) entgegenwirkt.

10. Vorrichtung nach Anspruch 9, **dadurch gekennzeichnet, dass** die Umdrehungsfläche (29) sich in der Nähe der Aussparungen (22) und der massiven Bereiche (26) befindet, so dass es eine magnetische Wechselwirkung zwischen den Rollen (27) und der Umdrehungsfläche geben kann.
